Europäisches Patentamt

(19) European Patent Office

Office européen des brevets

(11) EP 0 500 445 B1

# (12) FASCICULE DE BREVET EUROPEEN

(45) Date de publication et mention
de la délivrance du brevet:
**22.05.1996 Bulletin 1996/21**

(51) Int. Cl.[6]: **C03C 17/34**

(21) Numéro de dépôt: **92400418.7**

(22) Date de dépôt: **18.02.1992**

(54) **Procédé de fabrication d'une couche protectrice à base d'un oxide métallique sur un substrat de verre**

Verfahren zur Herstellung einer leitfähigen Schicht auf Metalloxidbasis auf Glas

Process for making a conductive metal oxide layer on a glass substrate

(84) Etats contractants désignés:
**AT BE CH DE DK ES FR GB IT LI LU NL SE**

(30) Priorité: **20.02.1991 FR 9102002**

(43) Date de publication de la demande:
**26.08.1992 Bulletin 1992/35**

(73) Titulaire: **SAINT-GOBAIN VITRAGE
F-92400 Courbevoie (FR)**

(72) Inventeurs:
• **Balian, Pierre
F-75015 Paris (FR)**
• **Zagdoun, Georges
F-92250 La Garenne-Colombes (FR)**
• **Trouve, Maurice
F-77140 Saint-Pierre les Nemours (FR)**

(74) Mandataire: **Muller, René et al
SAINT-GOBAIN RECHERCHE,
39, quai Lucien Lefranc-BP 135
F-93303 Aubervilliers Cédex (FR)**

(56) Documents cités:
**EP-A- 0 278 836           FR-A- 2 005 224
GB-A- 2 136 316           US-A- 4 655 811**

• **THIN SOLID FILMS. vol. 102, no. 1, Avril 1983, LAUSANNE CH pages 1 - 46; K.L.Chopra et al.: "Transparent Conductors-A Status Rewiew"**
• **CHEMICAL ABSTRACTS, vol. 99, no. 14, 3 Octobre 1983, Columbus, Ohio, US; abstract no. 109648N, page 265 ; & JP-A-58069743**
• **JOURNAL OF NON-CRYSTALLINE SOLIDS. vol. 121, no. 1/3, 1 Mai 1990, AMSTERDAM NL pages 329 - 333; R.NASS ET AL.: 'Synthesis of an Alumina Coating From Chelated Aluminium Alkoxides.'**

## Description

La présente invention concerne un procédé de fabrication comportant d'une couche mince conductrice d'oxyde métallique, présentant tout particulièrement des propriétés de basse émissivité, de faible résistivité et de transparence, sur un substrat de verre.

Ce procédé utilise en particulier les techniques de pyrolyse à partir de composés organo-métalliques.

Le produit ainsi obtenu est en effet très intéressant quant à ses applications, par exemple dans le domaine du bâtiment: un substrat en verre revêtu d'une couche dite basse émissive utilisé pour former le vitrage d'une pièce permet d'accroître le taux de réflexion dudit vitrage, côté intérieur de la pièce, dans l'infra-rouge lointain, rayonnement émis par la pièce. Cela permet d'améliorer le confort des habitants, notamment en hiver, en réduisant les pertes énergétiques dues pour une part à une fuite de ce rayonnement vers l'extérieur à travers le vitrage. Il est avantageusement associé à un autre substrat transparent par l'intermédiaire d'une lame de gaz, de manière à ce que la couche basse émissive soit en face 3 en comptant à partir de la face extérieure, pour former un double-vitrage isolant efficace.

On peut utiliser ce produit pour les propriétés de basse émissivité de la couche, mais aussi pour ses propriétés de faible résistivité qui y sont liées, par exemple pour former des vitrages chauffants en prévoyant des arrivées de courant, notamment en tant que pare-brise ou lunette arrière chauffante dans une automobile.

De même, on peut utiliser ce produit dans des dispositifs opto-électroniques, notamment en tant qu'électrode transparente.

Les couches minces présentant ces propriétés sont par exemple des couches d'oxyde d'indium dopé à l'étain (ITO), ou d'oxyde de zinc dopé à l'aluminium, à l'indium, ou au fluor, ou d'oxyde d'étain dopé au fluor.

Usuellement, des couches d'oxyde métallique peuvent être obtenues par différents procédés : par des procédés sous vide (évaporation thermique, pulvérisation cathodique, éventuellement à l'aide de magnétron) ou par pyrolyse de composés organo-métalliques projetés par un gaz vecteur sous forme liquide, solide ou gazeuse sur la surface du substrat en verre chauffé à une température élevée mais néanmoins inférieure à sa température de ramollissement. Ceux-ci, mis ainsi en contact avec une surface chaude, se décomposent en s'oxydant et forment sur cette surface une couche d'oxyde métallique.

Les techniques de pyrolyse ont été développées à un tel point que l'on peut effectuer le dépôt de la couche sur la ligne de fabrication même du substrat en verre en particulier sur ligne float, même lorsque le verre défile à des vitesses élevées comme c'est parfois le cas, des vitesses supérieures à 20 m/mn étant possibles en sortie du bain float.

Le dépôt s'effectue à partir de produits organo-métalliques "précurseurs" par exemple en sortie du bain float, au moyen de une ou plusieurs buses, lorsque le verre est encore sous forme de ruban continu défilant à une vitesse et à une température données.

Mais lorsqu'on forme des couches, par exemple d'ITO, dont les propriétés de conductivité et de faible émissivité sont au moins en partie dues à des lacunes en oxygène, on rencontre un certain problème.

En effet, si le dépôt se fait notamment par pyrolyse, le verre poursuit sa course sur la ligne de fabrication et passe par une étenderie de recuisson permettant de relâcher les contraintes dans le verre par un contrôle de la descente en température du verre. Mais la couche d'oxyde métallique, au contact de l'air ambiant, a tendance, pendant ces opérations, à s'oxyder de façon importante. Il est donc nécessaire de procéder à une opération de recuit réducteur, consistant à faire séjourner hors la ligne de fabrication le substrat à couche dans une enceinte chauffée vers 450°C sous atmosphère réductrice pendant un certain temps.

Cette étape supplémentaire, jusque-là nécessaire pour certains oxydes ayant besoin d'un tel traitement réducteur pour diminuer leur résistivité, notamment pour l'ITO, présente de nombreux inconvénients.

Tout d'abord, elle se fait habituellement en reprise, ce qui augmente le coût de la production en exigeant une installation à part et un réchauffage du verre.

De plus, elle interdit tout traitement thermique, notamment un bombage et/ou trempe, qu'il soit préalable ou postérieur à ce recuit : si l'on effectuait par exemple une trempe à l'air avant le recuit, la remontée en température imposée par le recuit risquerait d'annihiler, ou tout au moins d'amoindrir, les effets de la trempe du verre. Et si l'on effectuait la trempe après le recuit, la trempe à l'air, nécessitant usuellement des températures d'au moins 650°C, risquerait de réoxyder la couche. Il serait très utile de trouver un moyen permettant de traiter thermiquement le substrat en verre pourvu de sa couche mince conductrice d'oxyde métallique, ainsi qu'éventuellement de supprimer une étape de recuit réducteur lorsqu'elle est usuellement pratiquée, tout en préservant les performances élevées de ladite couche.

Par ailleurs, il se trouve que les couches notamment conductrices basses émissives, aux épaisseurs interférentielles, présentent, seules sur un substrat en verre, une couleur en réflexion qui est imposée par l'épaisseur sélectionnée, par exemple, bleu pour une couche d'ITO de 180 nm, ou vert lorsque son épaisseur est de 360 nm. On rappelle à ce propos qu'on évalue une couleur par deux paramètres : la longueur d'onde dominante, indiquant la tonalité de la couleur, et la pureté, exprimée en pourcentage, indiquant l'intensité de cette tonalité : si la pureté est faible, la couleur est peu intense, si elle est élevée, la couleur est très intense et peut être reproduite par une lumière monochromatique.

Il se peut que la tonalité de la couleur et/ou la pureté de celle-ci ne soient pas souhaitées, ou même soient inadaptées à l'utilisation que l'on envisage, notamment dans le domaine automobile où règnent de sévères contraintes esthétiques.

Il serait donc important de pouvoir maîtriser la couleur en réflexion d'un substrat pourvu d'une telle couche, et particulièrement de pouvoir obtenir une quasi-neutralité en réflexion.

De plus, de légères variations d'épaisseur dans la couche risqueraient d'induire des irisations peu esthétiques.

Il a été proposé pour atténuer les colorations interférentielles en réflexion de déposer sur le substrat au moins une couche intermédiaire avant de déposer la couche conductrice. Cette couche intermédiaire est choisie avec un indice de réfraction et une épaisseur géométrique déterminées de manière à ce que la couleur en réflexion globale du substrat muni de ces deux couches soit proche de la neutralité.

Des couches connues présentant un indice de réfraction approprié sont par exemple à base d'oxydes métalliques, de nitrures métalliques ou de leurs mélanges, ce sont par exemple des couches d'oxyde d'aluminium, éventuellement associé à d'autres oxydes comme $SnO_2$, $ZnO$, $TiO_2$, ..., d'oxycarbure ou d'oxynitrure de silicium.

La couche intermédiaire permet effectivement de réduire la coloration en réflexion, mais peut constituer des contraintes de fabrication.

Il est connu de la demande de brevet EP-A-0 278 836 la fabrication de couches minces électroconductrices sur des substrats de verre, notamment de couches à base d'oxyde d'étain déposées par CVD. Ces couches sont ensuite soumises, après dépôt, à un traitement thermique, notamment en atmosphère $H_2$, $N_2$ ou $H_2/N_2$, afin d'en améliorer leur conduction électrique.

Il est également connu de la demande de brevet FR-A-2 005 224 la fabrication de verres de fenêtre protégés contre les charges électrostatiques, et pour ce faire munis de couches minces dont une couche conductrice du type oxyde d'indium surmontée d'une couche de protection vis-à-vis de l'abrasion, notamment à base d'oxyde de silicium.

Un but que se fixe l'invention est donc d'obtenir un substrat en verre revêtu d'une couche d'oxyde métallique à propriétés de faible résistivité et de basse émissivité sans avoir à opérer de traitement visant à améliorer lesdites propriétés, notamment un traitement de recuit réducteur, quand celui-ci est usuellement préconisé.

Un autre but, éventuellement combiné au précédent, de l'invention est d'obtenir un substrat en verre muni de la même nature de couche et autorisant des traitements thermiques ultérieurs tels qu'un bombage et/ou trempe, sans nuire aux propriétés dudit substrat à couche et cela sans précautions particulières telles qu'un traitement sous atmosphère réductrice.

Un autre but, éventuellement combiné aux précédents, est d'obtenir, à partir d'un substrat muni d'au moins une couche d'épaisseur interférentielle, notamment de la nature précédemment décrite, une maîtrise de la coloration en réflexion et en particulier une quasi-neutralité en réflexion.

Un autre but, éventuellement combiné aux précédentes, de l'invention est d'obtenir à partir d'un substrat en verre muni d'au moins une couche d'épaisseur interférentielle, notamment de la nature décrite précédemment, aucun défaut d'aspect dû à des irisations.

L'invention a pour objet un procédé de fabrication d'une couche conductrice à base d'oxyde métallique sur un substrat de verre, tel qu'afin d'éviter un traitement réducteur ultérieur au dépôt de la couche conductrice et/ou afin de pouvoir lui faire subir un traitement thermique du type bombage/trempe, on dépose sur le substrat ladite couche conductrice dans un état de sous-stoechiométrie en oxygène, puis on dépose sur cette couche conductrice une surcouche d'oxyde métallique alors que la couche conductrice est encore dans son état de sous-stoechiométrie en oxygène, pour bloquer le processus d'oxydation de cette dernière.

Le produit selon l'invention comporte un substrat en verre portant au moins une couche transparente conductrice d'oxyde métallique sous-stoechiométrique, revêtue d'une couche à base d'oxyde métallique protégeant la couche conductrice de l'oxydation, cette couche étant désignée par la suite par le terme de surcouche.

On précise que dans le cadre de cette invention, l'état dit de « sous-stoechiométrie » de la couche est celui qui correspond aux caractéristiques telles que celles obtenues après une opération de recuit réducteur.

Ladite couche conductrice est avantageusement constituée par un oxyde métallique dopé tel que l'oxyde d'indium dopé à l'étain (ITO), l'oxyde d'étain dopé au fluor ($SnO_2$:F), l'oxyde de zinc dopé à l'indium (ZnO:In), au fluor (ZnO:F), à l'aluminium (ZnO:Al), ou à l'étain (ZnO: Sn).

La surcouche est selon l'invention choisie parmi au moins un des oxydes métalliques suivants : l'oxyde d'aluminium ($Al_2O_3$), de titane ($TiO_2$), de zinc (ZnO), de zirconium ($ZrO_2$), de chrome ($Cr_2O_3$) ou de silicium ($SiO_2$). De préférence, on choisira l'oxyde d'aluminium.

Le produit obtenu comprenant le substrat muni de ses deux couches présente selon l'invention une émissivité de préférence inférieure ou égale à 0,2.

Comme explicité plus loin lors de l'exposé des différents procédés d'obtention d'un tel produit, la sur-couche va très avantageusement jouer le rôle d'un écran protecteur de la couche conductrice, afin que celle-ci conserve un état de sous-stoechiométrie en oxygène, sousstoechiométrie importante car amplifiant les propriétés électroniques recherchées de la couche conductrice.

D'une part, on pourra donc éviter d'avoir à effectuer une opération réductrice de la couche conductrice lorsqu'elle est usuelle, puisque sa sous-stoechiométrie en oxygène n'est plus menacée par une réoxydation ultérieure.

D'autre part, muni de cette sur-couche, le substrat revêtu de la couche conductrice va pouvoir subir tout traitement thermique du type de ceux mis en oeuvre pour un bombage/trempe sans dommages pour les propriétés de la couche conductrice. Ceci est notamment avantageux dans le cas d'une couche conductrice d'ITO ou de ZnO dopé, qui, d'habitude, ont besoin d'une opération de recuit réducteur. Ceci permet d'envisager des applications plus diversifiées pour de telles couches.

De plus, pour pouvoir maîtriser la coloration en réflexion d'un tel produit, et notamment obtenir un vitrage neutre en réflexion, il faut, selon l'invention, faire une sélection appropriée des indices de réfraction des deux couches, ainsi que de l'épaisseur optique (c'est-à-dire le produit de l'épaisseur réelle par l'indice de réfraction de la couche considérée) de la sur-couche.

En effet, en choisissant une sur-couche dont l'indice de réfraction est inférieur à celui de la couche conductrice, on crée un "gradient d'indices" entre l'indice de la couche conductrice, généralement compris entre 1,8 et 2, celui de la sur-couche que l'on choisit avantageusement entre 1,4 et 1,7, et celui de l'air ambiant qui vaut 1.

De plus, si l'on choisit comme épaisseur optique de la sur-couche une valeur correspondant sensiblement au quart de la longueur d'onde de la lumière incidente moyennée sur le spectre visible et centrée sur 510 nm, on obtient un produit qui présente une quasi-neutralité en réflexion, ce qui peut se chiffrer par une pureté en réflexion inférieure ou égale à 10 %.

La conséquence directe de l'obtention d'un produit quasi-neutre en réflexion est que les irisations, si tant est qu'il y en ait, sont simultanément très fortement diminuées.

Avantageusement, on atteint une telle neutralité en réflexion avec une couche conductrice d'épaisseur interférentielle parmi celles précédemment évoquées, comme ITO, ZnO:In, ZnO:F, ZnO:A1, ZnO:Sn, $SnO_2$:F dont les indices de réfraction s'échelonnent effectivement entre environ 1,8 et 2.

Quant à la nature de la sur-couche, là encore on choisit dans le groupe d'oxydes précédemment cité à son sujet, soit un oxyde métallique seul dont l'indice de réfraction est déjà compris entre 1,4 et 1,7, comme c'est le cas pour l'oxyde d'aluminium, soit un mélange approprié d'oxydes métalliques afin d'atteindre l'indice de réfraction voulu, par exemple en mélangeant un oxyde métallique à indice supérieur à 2 tel que $ZrO_2$ avec un autre oxyde à plus bas indice tel que $Al_2O_3$ ou $SiO_2$.

Pouvoir faire un tel produit neutre en réflexion est très avantageux, car cela permet d'envisager là encore des utilisations très élargies dudit produit, aussi bien dans le bâtiment, dans l'automobile ou dans l'électronique.

On précise que, suivant les utilisations souhaitées, le substrat en verre est notamment de nature silico-sodocalcique, clair ou coloré dans la masse : le verre dit "clair" peut présenter une transmission lumineuse ($T_L$) importante, par exemple de l'ordre de 90 % pour une épaisseur de 4 mm. Comme verre coloré dans la masse, on peut utiliser le verre dit "TSA" contenant du $Fe_2O_3$ dans des proportions pondérales de l'ordre de 0,55 à 0,62 %, du FeO par 0,11 à 0,16 %, ce qui conduit à un rapport $Fe^{2+}/Fe^{3+}$ de l'ordre de 0,19 à 0,25, du CoO pour moins de 12 ppm et de préférence pour moins de 10 ppm.

Comme verre plus coloré, les proportions du verre dit "TSA⁺⁺" sont un peu différentes : le $Fe_2O_3$ a une proportion pondérale comprise environ entre 0,75 et 0,9 %, le $F_2O_3$ entre 0,15 et 0,22 %, soit un rapport $Fe^{2+}/Fe^{3+}$ de 0,2 et un pourcentage de CoO inférieur à 17 ppm et de préférence inférieur à 10 ppm.

Il en résulte des $T_L$ plus faibles, de l'ordre de 78 % pour une épaisseur de 3,85 mm pour un verre "TSA", et de l'ordre de 72 % pour un verre "TSA⁺⁺" de même épaisseur.

Que l'on privilégie uniquement l'objectif d'un produit ne nécessitant plus de traitement réducteur ultérieur au dépôt de la couche conductrice et/ou pouvant subir un traitement thermique type bombage/trempe, ou que l'on se fixe de surcroît l'objectif d'un vitrage neutre en réflexion, tout procédé usuel peut être utilisé pour les dépôts des deux couches. Comme on l'a indiqué précédemment, on peut choisir des procédés utilisant le vide pour déposer soit les deux couches, soit l'une d'entre elles.

Mais on peut également utiliser avantageusement les techniques de pyrolyse permettant des dépôts sur la ligne de fabrication du verre. Là encore, soit on choisit de déposer par pyrolyse les deux couches, soit seulement l'une d'entre elles.

L'essentiel selon l'invention est en fait de protéger la couche conductrice par la sur-couche lorsque la couche conductrice est dans son état optimal quant à ses propriétés électroniques, c'est-à-dire lorsqu'elle est, outre son dopage, en sous-stoechiométrie en oxygène.

Or effectivement, la couche conductrice, notamment d'ITO lorsqu'elle vient d'être déposée par pyrolyse sur le verre en sortie de bain de flottage, est sous-stoechiométrique. Et ses propriétés électroniques s'altèrent dans la suite du processus thermique lorsque le verre est ramené à la température ambiante sous atmosphère ambiante, ce qui conduit à mettre en oeuvre l'opération de recuit réducteur.

Bloquer le processus d'oxydation par dépôt d'une sur-couche permet d'obtenir un substrat à couche conductrice ayant de bonnes performances et pouvant subir tout traitement thermique tel qu'une trempe, en se dispensant éventuellement d'un traitement réducteur.

Le dépôt de la couche conductrice et celui de la sur-couche de protection se font de préférence dans des conditions qui ne nécessitent pas de recuit réducteur. Ces dépôts peuvent être immédiatement consécutifs. Ils peuvent aussi être séparés dans le temps lorsque la production de la couche conductrice est faite dans des conditions qui ne nécessitent pas la mise en oeuvre d'un recuit réducteur. Cette situation peut être due à la nature de la couche conductrice ou à son mode d'obtention. C'est par exemple le cas d'une couche d'ITO qui serait produite par dépôt sous vide et ne subirait pas l'oxydation constatée dans les techniques de pyrolyse sur ligne de float.

Selon un des modes préférés de réalisation de l'invention, les deux couches sont obtenues par deux dépôts par pyrolyse. Avantageusement, ils sont consécutifs, réduisant ainsi au minimum la durée pendant laquelle la couche conductrice est en contact avec l'atmosphère.

Dans la mesure où les propriétés de la couche type ITO se sont dégradées avant revêtement, celles-ci sont regénérées avant le dépôt de la sur-couche par un traitement adéquat.

Dans le cas où chacun des dépôts, de la couche conductrice puis de la sur-couche, se fait donc par pyrolyse, on indique ci-dessous les composés organo-métalliques "précurseurs" qui, en se pyrolysant, donnent les oxydes métalliques voulus. Mais il est clair que toute autre procédé d'obtention est envisageable, notamment tout procédé utilisant le vide.

Ainsi, pour obtenir une couche conductrice d'ITO par pyrolyse, on choisit de préférence un mélange pulvérulent de formiate d'indium et d'oxyde de dibutylétain.

Si la couche conductrice est en $SnO_2$:F, elle peut être obtenue par pyrolyse de poudre à partir d'oxyde de dibutylétain (DBTO) en poudre et d'acide fluorhydrique anhydre gazeux, comme il est décrit dans le brevet FR-2 380 997, à partir de difluorure de dibutylétain (DBTF) éventuellement, en mélange avec du DBTO comme décrit dans les documents EP-A-178 956 et EP-A-039 256.

On peut aussi l'obtenir par pyrolyse en phase gazeuse, notamment à partir d'un mélange de composés d'étain comme $(CH_3)_2 SnCl_2$, $(C_4H_9)_2 SnCl_2$, $Sn (C_2H_5)_4$ et de composés organofluorés tels que $CCl_2F_2$, $CHClF_2$ et $CH_3CHF_2$ comme décrit dans le brevet EP-A-027 403 ou bien encore à partir de monobutyltrichloroétain et un composé de formule x $CHF_2$ tel que le chlorodifluorométhane mentionné dans le brevet EP-A-121 459.

On peut aussi l'obtenir par pyrolyse en phase liquide à partir d'acétylacétonate d'étain ou de diméthylétain-2-propionate dans des solvants organiques appropriés comme décrits notamment dans le brevet FR-2 211 411.

Des couches de ZnO:In ou de ZnO:Al peuvent être obtenues par pyrolyse en phase vapeur, à partir de diéthylzinc ou d'acétate de zinc et de triéthylindium, chlorure d'indium ou triéthylaluminium, chlorure d'aluminium, comme décrit dans la demande de brevet EP-A-385 769.

Pour obtenir une sur-couche à base d'oxyde d'aluminium $Al_2O_3$, on peut pyrolyser un composé organique d'aluminium présentant au moins une fonction alcoolate ou au moins une fonction β-dicétone. Ledit composé organique sera notamment à base de l'une des produits suivants : tri-isopropylate d'aluminium, tri-n-butylate d'aluminium, tri-ter butylate d'aluminium, tri-éthylate d'aluminium, acétylacétonate d'aluminium.

Pour former sur un substrat en verre les couches selon l'invention, par pyrolyse de poudre notamment, on peut utiliser différents dispositifs connus, tels que ceux décrits dans les demandes de brevet européen EP-A-6 064, 125 153, 130 919, 188 962, 189 709, 191 258, 329 519.

D'une manière générale, on utilise pour déposer une couche une buse de distribution, située au dessus du substrat de verre chaud à traiter, en particulier un ruban de verre en mouvement tel que du verre flotté, soit dans le bain float lui-même, soit en aval de celui-ci.

De manière connue, on utilise dans le cas d'une pyrolyse de poudre une buse qui s'étend transversalement sur toute la largeur du ruban de verre. Ladite buse est munie d'une cavité alimentée de manière homogène en poudre(s) en suspension dans un gaz. La poudre sort de la fente de la buse et se pyrolyse sur la surface chaude du verre.

Par contre, dans le cas d'une pyrolyse de précurseurs en suspension liquide, la conception de la buse est différente, celle-ci étant cette fois mobile et effectuant un va-et-vient transversal par rapport au ruban de verre.

Quant à la pyrolyse en phase gazeuse, également désignée sous le terme CVD, (Chemical Vapor Deposition), des dispositifs de buse appropriés sont décrits dans le brevet français 2 274 572.

Le ruban de verre en sortie de bain float défile à une vitesse comprise habituellement entre 3 et 25 m/mn.

Les dépôts par pyrolyse se font à des températures entre 400 et 750°C, entre 400°C et 610°C à l'extérieur du bain float, et au-delà de 610°C à l'intérieur de celui-ci.

Dans le cas où les dépôts des couches se font consécutivement par deux pyrolyses, qu'elles soient en phase solide, liquide ou gazeuse, il peut être intéressant selon l'invention, lorsque cela est possible, de placer les deux buses de manière proche l'une de l'autre.

Tout d'abord, cela limite la possibilité de la couche conductrice de s'oxyder avant le dépôt de la sur-couche.

Ensuite, si l'on choisit avantageusement les précurseurs des deux couches de manière à ce qu'ils aient des températures de pyrolyse correspondant à celles rencontrées sur la ligne de fabrication float, et de plus très voisines l'une de l'autre, en faisant les deux dépôts consécutivement, on s'épargne une opération de réchauffage du verre entre les deux dépôts.

Il faut cependant veiller à ce qu'une trop grande proximité entre les des buses ne provoque une interpénétration trop importante des deux jets, ce qui pourrait nuire à l'homogénéité de chacune des couches, en particulier à proximité de l'interface entre les couches.

D'autres détails et caractéristiques avantageuses de l'invention ressortent de la description suivante d'exemples de réalisation non limitatifs.

## EXEMPLES 1 ET 2

On n'effectue le dépôt que de la couche conductrice, en l'occurence de l'ITO, par pyrolyse de poudre constituée de 90 % en poids de formiate d'indium ($InFO_3$) et 10 % en poids de dibutyloxyde d'étain (DBTO) sur du verre clair flotté de 4 mm d'épaisseur défilant en face de la buse à une vitesse de 7 m/mn et chauffé vers 625°C. Le gaz vecteur est de l'air.

## EXEMPLE 1

- épaisseur ITO : 360 nm
- on effectue ensuite une opération de recuit réducteur du substrat muni de sa couche dans les conditions habituelles, par exemple en le faisant séjourner 30 mn à 420°C dans une atmosphère azote/hydrogène en proportion 90/10.
- caractéristiques obtenues : (sachant que $T_L$ signifie transmission lumineuse, $R_L$ réflexion lumineuse, domR la longueur d'onde dominante de la couleur en réflexion, p la pureté de la couleur en réflexion, l'émissivité, R la résistivité et R la résistance, et que les mesures de $R_L$ et $T_L$ se font par l'illuminant $D_{65}$)

$$
\begin{aligned}
T_L &= 78,9\ \% \\
R_L &= 14\ \% \\
\lambda\,domR &= 506\ nm \\
\rho\,R &= 11,12\ \% \\
\varepsilon &= 0,08 \\
\rho &= 2.10^{-4}\ \Omega.cm
\end{aligned}
\left.\begin{aligned}\ \\ \ \\ \ \\ \ \end{aligned}\right\}
\text{coloration verte en réflexion}
$$

## EXEMPLE 2

Le substrat muni de sa couche ITO et ayant subi une opération de recuit selon l'exemple 1 est réchauffé ultérieurement dans un four à 650°C.

- caractéristique obtenue :

$$\varepsilon = 0,45$$

$$R_\square > 50\ \Omega$$

On constate donc que sans la sur-couche protectrice, une couche d'ITO sur un substrat en verre implique une coloration relativement importante en réflexion, avec une pureté supérieure à 10 %, et l'on vérifie que pour obtenir une émissivité satisfaisante, c'est-à-dire inférieure à 0,2, il faut faire une opération de réduction. En outre, les propriétés de basse émissivité et faible résistivité sont complètement dégradées si l'on réchauffe le tout afin de simuler un traitement thermique comme un bombage et/ou trempe à l'air.

## EXEMPLES 3 A 6

On effectue cette fois les dépôts de la couche conductrice et de la sur-couche selon l'invention. Les dépôts sont faits par deux pyrolyses consécutives de poudre dans les mêmes conditions. Le substrat en verre est le même que précédemment.

La couche conductrice est en ITO obtenue comme précédemment.

La sur-couche est en oxyde d'aluminium $Al_2O_3$, obtenue par pyrolyse de tri-isopropylate d'aluminium (IPA).

Aucun réchauffage n'est effectué entre les deux dépôts.

## EXEMPLE 3

- épaisseur $Al_2O_3$ = 100 nm
- épaisseur ITO = 200 nm

- caractéristiques obtenues :

$$
\begin{aligned}
T_L &= 87,2 \ \% \\
R_L &= 8,7 \ \% \\
\lambda \ \mathrm{domR} &= 524 \ \mathrm{nm} \\
\rho \ R &= 5,2 \ \% \\
\end{aligned}
\left. \right\} \quad \text{neutre en réflexion}
$$

$$
\begin{aligned}
\varepsilon &= 0,10 \\
\rho &= 2.10^{-4} \ \Omega.\mathrm{cm}
\end{aligned}
$$

Sans faire d'opération de recuit réducteur, on obtient des propriétés de basse émissivité et de faible résistivité tout à fait comparables à celles de l'exemple 1 avec une couche d'ITO d'épaisseur plus faible.

De plus, au point de vue optique, les performances sont très améliorées puisque la transmission lumineuse augmente de manière importante. A la fois la réflexion lumineuse et la pureté en réflexion diminuent très sensiblement, ce qui donne une quasi-neutralité en réflexion.

## EXEMPLE 4

Les deux couches sont déposées sur le substrat conformément à l'exemple 3. L'ensemble est réchauffé ultérieurement 6 mn dans un four à 650°C.

- caractéristiques obtenues :

$$\varepsilon = 0,11$$

Cela montre clairement que la sur-couche selon l'invention permet efficacement de protéger la couche conductrice et d'en préserver les propriétés, notamment de basse émissivité, lors d'un traitement thermique ultérieur.

## EXEMPLE 5

- épaisseur ITO = 310 nm
- épaisseur $Al_2O_3$ = 70 nm
- le substrat muni de ces deux couches est ensuite réchauffé 6 mn dans un four à 650°C,
- caractéristiques obtenues :

$$
\begin{aligned}
T_L &= 86,9 \ \% \\
R_L &= 10,5 \ \% \\
\lambda \ \mathrm{domR} &= 504 \ \mathrm{nm} \\
\rho \ R &= 4,7 \ \% \\
\end{aligned}
\left. \right\} \quad \text{neutre en réflexion}
$$

$$
\begin{aligned}
\varepsilon &= 0,10 \\
R_{\square} &= 7 \ \Omega
\end{aligned}
$$

Là encore, même après réchauffage, on obtient des performances électroniques et optiques satisfaisantes, puisque le substrat à couche est neutre en réflexion avec une pureté inférieure à 5 %.

EXEMPLE 6

Il est similaire à l'exemple 5. Seules changent les épaisseurs des couches :

- épaisseur ITO = 280 nm
- épaisseur $Al_2O_3$ = 90 nm
- caractéristiques obtenues :

$$
\begin{aligned}
T_L &= 86,8 \ \% \\
R_L &= 8,8 \ \% \\
\lambda\,domR &= 525 \ nm \\
\rho\,R &= 6,6 \ \% \\
\mathcal{E} &= 0,10 \\
R_\square &= 7 \ \Omega.
\end{aligned}
\left.\quad\right\} \ \text{neutre en réflexion}
$$

EXEMPLES 7 ET 8

Cette fois, la couche conductrice est en oxyde d'étain dopé au fluor $SnO_2{:}F$, et obtenue par pyrolyse de poudre à partir de DBTF sur un substrat ayant les mêmes caractéristiques que précédemment, dans les mêmes conditions de vitesse et température.

EXEMPLE 7

On ne dépose pas de sur-couche.

- épaisseur $SnO_2{:}F$ = 360 nm
- caractéristiques obtenues :

$$
\begin{aligned}
T_L &= 76,4 \ \% \\
R_L &= 14,3 \ \% \\
\lambda\,domR &= 537 \ nm \\
\rho\,R &= 13,5 \ \% \\
\mathcal{E} &= 0,22.
\end{aligned}
\left.\quad\right\} \ \text{forte coloration verte en réflexion}
$$

En l'absence de sur-couche, on constate donc que le substrat muni d'une couche de $SnO_2{:}F$ est très fortement coloré en réflexion, ce qui peut être très préjudiciable vu les applications envisagées.

EXEMPLE 8

Le substrat est muni d'une couche en $SnO_2{:}F$ selon l'exemple 10, puis celle-ci est recouverte d'une sur-couche en $Al_2O_3$ selon l'invention par pyrolyse de poudre à partir d'IPA.

- épaisseur $SnO_2{:}F$ = 360 nm
- épaisseur $Al_2O_3$ = 80 nm

- caractéristiques obtenues :

$$T_L = 83,4\ \%$$
$$R_L = 7,6\ \%$$
$$\measuredangle\ domR = -563\ nm$$
$$\rho\ R = 2,6\ \%$$
$$\varepsilon = 0,23.$$

$\left.\right\}$ complète neutralité en réflexion

On constate qu'ajouter cette sur -couche augmente là encore notablement la valeur de $T_L$, diminue celle de $R_L$ et surtout très considérablement celle de la pureté en réflexion. La longueur d'onde dominante est conventionnellement négative selon le diagramme chromatique, ce qui signifie que la tonalité serait dans les pourpres, mais la pureté est si faible que la coloration est très "lavée de blanc" et donne une neutralité en réflexion d'une qualité exceptionnelle.

**Revendications**

1. Procédé de fabrication d'une couche conductrice à base d'oxyde métallique sur un substrat de verre, caractérisé en ce qu'afin d'éviter un traitement réducteur ultérieur au dépôt de la couche conductrice et/ou afin de pouvoir lui faire subir un traitement thermique du type bombage/trempe :

   $\Rightarrow$ on dépose sur le substrat ladite couche conductrice dans un état de sous-stoechiométrie en oxygène,
   $\Rightarrow$ on dépose sur cette couche conductrice une surcouche d'oxyde métallique alors que la couche conductrice est encore dans son état de sous-stoechiométrie en oxygène, pour bloquer le processus d'oxydation de celle-ci.

2. Procédé selon la revendication 1, caractérisé en ce que les dépôts des deux couches sont consécutifs.

3. Procédé selon la revendication 1 ou la revendication 2, caractérisé en ce qu'on dépose au moins une des couches par une technique de pyrolyse, notamment à partir de produits organo-métalliques.

4. Procédé selon l'une des revendications 1 à 3, caractérisé en ce qu'on dépose au moins une des deux couches par un procédé utilisant le vide.

5. Procédé selon l'une des revendications précédentes, caractérisé en ce que l'on choisit la couche conductrice en un oxyde métallique dopé appartenant au groupe comprenant l'oxyde d'indium dopé à l'étain ITO, l'oxyde d'étain dopé au fluor SnO2:F, l'oxyde de zinc dopé à l'indium ZnO:In, au fluor ZnO:F, à l'aluminium ZnO:Al ou à l'étain ZnO:Sn.

6. Procédé selon l'une des revendications précédentes, caractérisé en ce que l'on choisit la surcouche à base d'au moins un oxyde métallique appartenant au groupe comprenant l'oxyde d'aluminium ($Al_2O_3$), l'oxyde de titane ($TiO_2$), l'oxyde de zinc (ZnO), l'oxyde de zirconium ($ZrO_2$), l'oxyde de chrome ($Cr_2O_3$), l'oxyde de silicium ($SiO_2$).

7. Procédé selon l'une des revendications précédentes, caractérisé en ce que l'on obtient un substrat muni des deux couches présentant une émissivité inférieure ou égale à 0,2.

8. Procédé selon l'une des revendications précédentes, caractérisé en ce que l'on choisit l'indice de réfraction de la couche conductrice compris entre 1,8 et 2 et celui de la surcouche entre 1,4 et 1,7.

9. Procédé selon l'une des revendications précédentes, caractérisé en ce que l'on sélectionne les indices de réfraction et épaisseurs optiques des deux couches de manière a ce que le substrat muni des couches présente une pureté en réflexion inférieure ou égale à 10 % et de préférence à 6 %.

10. Procédé selon la revendication 8 ou 9, caractérisé en ce qu'on choisit l'épaisseur optique de la surcouche sensiblement égale au quart de la longueur d'onde de la lumière incidente moyennée sur le spectre visible et centrée sur 510 nm et un indice de réfraction inférieur à celui de la couche conductrice de manière à ce que le substrat muni des couches soit neutre en réflexion.

**11.** Produit selon l'une des revendications précédentes, caractérisé en ce que l'on choisit l'épaisseur géométrique de la surcouche comprise entre 50 et 120 nm, et de préférence entre 80 et 100 nm.

**12.** Procédé selon l'une des revendications précédentes, caractérisé en ce que l'on choisit une surcouche en oxyde d'aluminium et qu'on la dépose par pyrolyse d'un composé organique d'aluminium présentant au moins une fonction alcoolate ou β-dicétone.

**13.** Procédé selon la revendication 12, caractérisé en ce que le composé organique d'aluminium appartient au groupe suivant : tri-isopropylate d'aluminium, tri-n-butylate d'aluminium, tri-ter-butylate d'aluminium, tri-éthylate d'aluminium, acétyl-acétonate d'aluminium.

**14.** Utilisation du procédé selon l'une des revendications précédentes à la fabrication des vitrages présentant des propriétés de faible émissivité et de faible résistivité électrique, notamment des doubles vitrages pour bâtiments ou des vitrages chauffants pour automobiles.

## Claims

1. Method of producing a conducting film based upon metallic oxide on a glass substrate, characterized in that, for the purpose of avoiding a reducing treatment after the deposition of the conducting film and/or for the purpose of being able to subject it to a thermal treatment of the bending/toughening type:

   - said conducting film is deposited on the substrate in a state of sub-stoichiometry in oxygen,

   - onto said conducting film there is deposited a covering film of metallic oxide while the conducting film is still in its state of sub-stoichiometry in oxygen, for the purpose of blocking the oxidation process of said film.

2. Method according to claim 1, characterized in that the depositions of the two films are consecutive.

3. Method according to claim 1 or claim 2, characterized in that at least one of the films is deposited by a pyrolysis technique, notably from organometallic products.

4. Method according to one of claims 1 to 3, characterized in that at least one of the two films is deposited by a process using vacuum.

5. Method according to one of the preceding claims, characterized in that the conducting film is chosen as a doped metallic oxide belonging to the group comprising indium oxide doped with tin ITO, tin oxide doped with fluorine SnO2:F, zinc oxide doped with indium ZnO:In, with fluorine ZnO:F, with aluminium ZnO:Al or with tin ZnO:Sn.

6. Method according to one of the preceding claims, characterized in that the covering film is chosen based upon at least one metallic oxide belonging to the group comprising aluminium oxide ($Al_2O_3$), titanium oxide ($TiO_2$), zinc oxide (ZnO), zirconium oxide ($ZrO_2$), chromium oxide ($Cr_2O_3$), silicon oxide ($SiO_2$).

7. Method according to one of the preceding claims, characterized in that a substrate provided with the two films having an emissivity less than or equal to 0.2 is obtained.

8. Method according to one of the preceding claims, characterized in that the refractive index of the conducting film is chosen to lie between 1.8 and 2, and that of the covering film between 1.4 and 1.7.

9. Method according to one of the preceding claims, characterized in that the refractive indices and the optical thicknesses of the two films are chosen so that the substrate provided with the films has a purity in reflection less than or equal to 10% and preferably 6%.

10. Method according to claim 8 or 9, characterized in that the optical thickness of the covering film is chosen substantially equal to one-quarter of the wavelength of the incident light averaged over the visible spectrum and centred on 510 nm and a refractive index less than that of the conducting film in such a way that the substrate provided with the films shall be neutral in reflection.

11. Product according to one of the preceding claims, characterized in that the geometric thickness of the outer film is chosen to lie between 50 and 120 nm, and preferably between 80 and 100 nm.

12. Method according to one of the preceding claims, characterized in that a covering film of aluminium oxide is chosen and that it is deposited by pyrolysis of an organic compound of aluminium possessing at least one alcoholate function or β-diketone function.

13. Method according to claim 12, characterized in that the organic aluminium compound belongs to the following group: aluminium tri-isopropylate, aluminium tri-n-butylate, aluminium tri-ter-butylate, aluminium tri-ethylate, aluminium acetyl-acetonate.

14. Use of the method according to one of the preceding claims for the production of panes having properties of low emissivity and low electrical resistivity, notably double glazing panes for buildings or heating panes for automobiles.

**Patentansprüche**

1. Verfahren zur Herstellung einer leitfähigen Schicht auf der Grundlage eines Metalloxids auf einem Glassubstrat, **dadurch gekennzeichnet, daß**, um eine sich an das Aufbringen der leitfähigen Schicht anschließende reduzierende Behandlung zu vermeiden und/oder sie einer thermischen Behandlung vom Typ des Biegens/Vorspannens aussetzen zu können,

   - diese leitfähige Schicht in einem an Sauerstoff unterstöchiometrischen Zustand auf das Substrat und

   - auf dieser leitfähigen Schicht eine Metalloxid-Deckschicht aufgebracht wird, während sich die leitfähige Schicht noch im an Sauerstoff unterstöchiometrischen Zustand befindet, um ihr Oxidieren zu verhindern.

2. Verfahren nach Anspruch 1, **dadurch gekennzeichnet, daß** die beiden Schichten nacheinander aufgebracht werden.

3. Verfahren nach Anspruch 1 oder 2, **dadurch gekennzeichnet, daß** mindestens eine der Schichten durch ein Pyrolyseverfahren, insbesondere ausgehend von metallorganischen Produkten, aufgebracht wird.

4. Verfahren nach einem der Ansprüche 1 bis 3, **dadurch gekennzeichnet, daß** mindestens eine der beiden Schichten durch ein Vakuumverfahren aufgebracht wird.

5. Verfahren nach einem der vorhergehenden Ansprüche, **dadurch gekennzeichnet, daß** als leitfähige Schicht ein dotiertes Metalloxid gewählt wird, das zu der Gruppe gehört, die mit Zinn dotiertes Indiumoxid ITO, mit Fluor dotiertes Zinnoxid $SnO_2$:F und mit Indium ZnO:In, Fluor ZnO:F, Aluminium ZnO:Al oder Zinn ZnO:Sn dotiertes Zinkoxid umfaßt.

6. Verfahren nach einem der vorhergehenden Ansprüche, **dadurch gekennzeichnet, daß** die Deckschicht auf der Grundlage mindestens eines Metalloxides gewählt wird, das zu der Gruppe gehört, die Aluminiumoxid ($Al_2O_3$), Titandioxid ($TiO_2$), Zinkoxid (ZnO), Zirconiumdioxid ($ZrO_2$), Chromoxid ($Cr_2O_3$) und Siliciumdioxid ($SiO_2$) umfaßt.

7. Verfahren nach einem der vorhergehenden Ansprüche, **dadurch gekennzeichnet, daß** man ein Substrat erhält, das mit zwei Schichten versehen ist, die einen Emissionskoeffizienten von höchstens 0,2 aufweisen.

8. Verfahren nach einem der vorhergehenden Ansprüche, **dadurch gekennzeichnet, daß** der Brechungsindex der leitfähigen Schicht zwischen 1,8 und 2 und der der Deckschicht zwischen 1,4 und 1,7 gewählt wird.

9. Verfahren nach einem der vorhergehenden Ansprüche, **dadurch gekennzeichnet, daß** die Brechungsindizes und die optischen Dicken der beiden Schichten derart gewählt werden, daß das mit den Schichten versehene Substrat unter einfallendem Licht einen spektralen Farbanteil von höchstens 10 % und vorzugsweise 6 % aufweist.

10. Verfahren nach Anspruch 8 oder 9, **dadurch gekennzeichnet, daß** für die Deckschicht eine optische Dicke von im wesentlichen einem Viertel der Wellenlänge des einfallenden Lichtes, das nach dem sichtbaren Spektrum gemittelt und auf 510 nm zentriert ist, und ein kleinerer Brechungsindex als der der leitfähigen Schicht gewählt wird, so daß das mit den Schichten versehene Substrat unter einfallendem Licht neutral ist.

**11.** Erzeugnis nach einem der vorhergehenden Ansprüche, **dadurch gekennzeichnet, daß** die geometrische Dicke der Deckschicht von 50 bis 120 nm und vorzugsweise von 80 bis 100 nm gewählt wird.

**12.** Verfahren nach einem der vorhergehenden Ansprüche, **dadurch gekennzeichnet, daß** eine Deckschicht aus Aluminiumoxid gewählt **und daß** sie durch Pyrolyse einer aluminiumorganischen Verbindung aufgebracht wird, die mindestens eine funktionelle Alkoholat- oder $\beta$-Diketongruppe aufweist.

**13.** Verfahren nach Anspruch 12, **dadurch gekennzeichnet, daß** die aluminiumorganische Verbindung zu der aus Aluminiumtriisopropylat, Aluminiumtri-n-butylat, Aluminiumtri-tert.-butylat, Aluminiumtriethylat, Aluminiumacetylacetonat bestehenden Gruppe gehört.

**14.** Anwendung des Verfahrens nach einem der vorhergehenden Ansprüche auf die Herstellung von Verglasungen, die einen niedrigen Emissionskoeffizienten und einen niedrigen spezifischen elektrischen Widerstand aufweisen, insbesondere Doppelverglasungen für Gebäude oder beheizbaren Verglasungen für Kraftfahrzeuge.